# EUROPEAN PATENT SPECIFICATION

(11) **EP 0 771 435 B1**
(45) Date of publication and mention of the grant of the patent: **27.06.2001**
(21) Application number: 96924247.8
(22) Date of filing: 11.01.1996
(51) Int. Cl.: H04B 7/26

(54) **METHOD AND APPARATUS FOR OFFSET FREQUENCY ESTIMATION FOR A COHERENT RECEIVER**
VERFAHREN UND VORRICHTUNG ZUM ABSCHÄTZEN DER FREQUENZVERSCHIEBUNG EINES KOHÄRENTEN EMPFÄNGERS
PROCEDE ET APPAREIL POUR UNE ESTIMATION DE LA FREQUENCE DECALEE POUR UN RECEPTEUR COHERENT

(30) Priority: 10.03.1995 US 402265
(43) Date of publication of application: 07.05.1997
(73) Proprietor: MOTOROLA, INC., Schaumburg, IL 60196 (US)
(72) Inventor: BRUCKERT, Eugene, Arlington Heights, IL 60005 (US); LING, Fuyun, Hoffman Estates, IL 60195 (US); SEXTON, Thomas, Aloysius, Schaumburg, IL 60193 (US)
(74) Representative: Morgan, Marc
(86) International application number: PCT/US96/00193
(87) International publication number: WO 96/29791

(56) References cited:
- US-A- 5 109 390
- US-A- 5 329 547
- US-A- 5 430 759

## Description

### Field of the Invention

The present invention relates, in general, to communication systems and, more particularly, to a method and apparatus for offset frequency estimation for a coherent receiver of a communication system.

### Background of the Invention

Communication systems take many forms. One type of communication system is a multiple access spread-spectrum system. In a spread-spectrum system, a modulation technique is utilized in which a transmitted signal is spread over a wide frequency band within the communication channel.

Three general types of spread-spectrum communication techniques exist, including direct sequence modulation, frequency and/or time hopping modulation, and chirp modulation. In direct sequence modulation, a carrier signal is modulated by a digital code sequence whose bit rate is much higher than the information signal bandwidth.

These direct sequence spread-spectrum communication systems can readily be designed as multiple access communication systems. For example, a spread-spectrum system may be designed as a direct sequence code division multiple access (DS-CDMA) system. In a DS-CDMA system, communication between two communication units is accomplished by spreading each transmitted signal over the frequency band of the communication channel with a unique user spreading code. As a result, transmitted signals are in the same frequency band of the communication channel and are separated only by unique user spreading codes. These unique user spreading codes preferably are orthogonal to one another such that the cross-correlation between the spreading codes is approximately zero.

It will be appreciated by those skilled in the art that several different spreading codes exist which can be used to separate data signals from one another in a DS-CDMA communication system. These spreading codes include but are not limited to pseudonoise (PN) codes and Walsh codes. A Walsh code corresponds to a single row or column of the Hadamard matrix.

Further it will be appreciated by those skilled in the art that spreading codes can be used to channel code data signals. The data signals are channel coded to improve performance of the communication system by enabling transmitted signals to better withstand the effects of various channel impairments, such as noise, fading, and jamming. Typically, channel coding reduces the probability of bit error, and/or reduces the required signal to noise ratio usually expressed as error bits per noise density (i.e., E_{b}/N₀ which is defined as the ratio of energy per information-bit to noise-spectral density), to recover the signal at the cost of expending more bandwidth than would otherwise be necessary to transmit the data signal. For example, Walsh code words can be used to channel code a data signal prior to modulation of the data signal for subsequent transmission. Similarly PN spreading codes can be used to channel code a data signal.

However, channel coding alone may not provide the required signal to noise ratio for some communication system designs which require the system to be able to handle a particular number of simultaneous communications (all having a minimum signal to noise ratio). This design constraint may be satisfied, in some instances, by designing the communication system to coherently detect transmitted signals rather than using non-coherent reception techniques. It will be appreciated by those skilled in the art that a coherent receiver requires less signal to noise ratio (in E_{b}/Nₒ) than that required by a non-coherent receiver having the same bit error rate (i.e., a particular design constraint denoting an acceptable interference level). Roughly speaking, there is a three decibel (dB) difference between them for the Rayleigh fading channel. The advantage of the coherent receiver is more significant when diversity reception is used, because there is no combining loss for an optimal coherent receiver while there is always a combining loss for a noncoherent receiver.

One such method for facilitating coherent detection of transmitted signals is to use a pilot signal. For example, in a cellular communication system the forward channel, or downlink, (i.e., from base station to mobile unit) may be coherently detected, if the base station transmits a pilot signal. Subsequently, all the mobile units use the pilot channel signal to estimate the channel phase and magnitude parameters. However, for the reverse channel, or up-link, (i.e., from mobile to base station), using such a common pilot signal is not feasible. As a result, those of ordinary skill in the art often assume that only non-coherent detection techniques are suitable for up-link communication.

A solution for the need for a coherent up-link channel is found in U.S. Patent No. 5,329,547 to Fuyun Ling, commonly assigned together with this application to Motorola, Inc. This patent discloses the introduction of reference bits into the information datastream prior to spreading and transmission, and the subsequent extraction of these reference samples and their use in forming an estimate of the channel response. This estimated channel response is in turn used to coherently detect estimated data symbols.

While this solution allows for coherent detection, it assumes that more or less standard phase-locked loops (PLL's) are used for frequency offset estimation. However, such techniques do not fully exploit the known synch pattern.

Phase locked loops, or PLLs, are well known in the art. A PLL circuit is usually formed as a phase detector fed by input and feedback signals, a loop filter and a voltage controlled oscillator for producing a sine wave (i.e., the feedback signal). A basic PLL compares its estimated frequency, the sine wave, with the noisy input signal using a phase detector. An ideal phase detector followed by a loop filter will form a noisy estimate of the phase difference between the input and the VCO (voltage controlled oscillator) output. The VCO thus acts on the loop filter output to create the PLL estimate of a sinewave with the phase (and thus frequency) of the input.

While an elemental PLL is reasonably good at tracking phase for most applications, it is not as good at acquiring or tracking signals with large frequency errors. A PLL is characterized by a pull-in range Bₚ. However, as Bₚ increases, so does the variance of the phase error. AFC (automatic frequency control) units, FLLs (Frequency Lock Loops), or PLL's with phase and frequency detectors are often used to track such signals. These circuits typically produce an estimate of the average input frequency only, and additionally require an elemental PLL if the phase is to be acquired. However, in wireless communications AFC design has been constrained by circuit complexity, so system designs have typically made frequency accuracy constraints somewhat loose to avoid prohibitive costs in complexity or processing requirements.

However, with the introduction of more optimal modulation schemes such as QPSK (quaternary phase shift keying), more precise frequency estimates--within 30-60 Hz (Hertz)--are often needed. This is particularly true of applications such as coherent reception of DS-CDMA (direct sequence code division multiple access) spread spectrum signals, where the signal to noise ratio of the samples containing the frequency information is around 0 decibels (dB) (i.e., noise power equals signal power), and the frequency error may be +/-1000 Hz or more before correction. These frequency errors may arise, for example, from the transmitter/receiver clock not being perfectly locked due to inaccuracies in the crystal oscillator, as well as from large Doppler frequency shifts (such as from vehicles moving at high speeds in open spaces). At wide frequency deviations in short time periods, a typical AFC or PLL would not be able to lock on or track the signal being received with any reasonable degree of accuracy. There thus remains a need for an improved AFC/PLL which compensates for these and other problems. According to a first aspect, the invention comprises a method for offset frequency estimation of a received signal having known reference information, the method comprising:
(a) extracting the reference information from the received signal;
(b) filtering the reference information to output a filtered reference sequence;
(c) correlating the filtered reference sequence against a predetermined reference signal to form correlation values; and characterised in that step (c) comprises correlating the filtered reference sequence against a plurality of candidates which comprise the predetermined reference signal, each candidate having a different phase change per a predetermined unit of time to obtain correlation values for each candidate, and further comprising the steps of
(d) determining an offset frequency estimate according to the correlation values obtained.

According to a second aspect, the present invention comprises a receiver for coherent reception of a first signal having known reference information and an extractor for extracting the reference information from the first signal, the receiver including an offset frequency estimator comprising:
(a) filtering means for filtering the reference information to output a filtered reference sequence;
(b) correlating means for correlating the filtered reference sequence against a predetermined reference signal to form correlation values; and characterised in that the correlating means is adapted to correlate the filtered reference sequence against a plurality of candidates which comprise the predetermined reference signal, each candidate having a different phase change per a predetermined unit of time to obtain correlation values for each candidate and further comprising
(c) determining means for determining an offset frequency estimate according to the correlation values obtained.

### Brief Description of the Drawings

FIG. 1 is a functional block diagram of a first embodiment of a receiver and offset frequency estimator 110 according to the invention;
FIG. 2 is a functional block diagram of a presently preferred embodiment of acquisition circuit 120 of FIG. 1; and
FIG. 3 is a functional block diagram of an alternative embodiment of tracking circuit 140 of FIG. 1;

### Detailed Description of the Drawings

These and other problems are solved by an improved offset frequency estimation approach according to the invention. A presently preferred embodiment of the invention is an offset frequency estimator, following a reference information extractor for extracting reference samples from a received signal. The offset frequency estimator preferably has an acquisition circuit that first filters the reference information (to form a filtered reference sequence), then correlates the sequence against a predetermined reference signal (e.g., a sequence or family of candidates in a DFT (discrete Fourier transform) correlator). The output correlation values are then used in determining an offset signal characteristic estimate (e.g., an offset frequency estimate); in the case of DFT processing, the index (e.g., a predetermined value corresponding to a time rate of phase change measure) of the peak output, detected in a peak detector, is passed to a lowpass filter. The output of the lowpass filter is an initial frequency estimate, f₀. When in tracking mode (after the received signal has been initially acquired), the reference symbol stream is inputted to a filter and the filtered sequence (or sample in this case) correlated against a prior sample to determine the phase rotation in a predetermined time interval. The result is lowpass filtered, adjusted according to a prior estimate, yielding a frequency estimate f. Alternative embodiments are also discussed below. Through the use of this improved AFC, faster acquisition and tracking than was possible with prior art methods can be achieved, as well as pilot/preamble signal detection, while still maintaining precise frequency estimates.

In the course of the following discussion, an improvement for DS-CDMA cellular communication is presented. This approach employs coherent-detection with reference-symbol based channel estimation, and in particular employs improved frequency estimation techniques to optimally detect the received signal. It will be appreciated by those skilled in the art that other types of communication systems (e.g., personal communication systems, trunked systems, satellite communication systems, data networks, and the like) may also be adapted and/or designed to use the principles described herein.

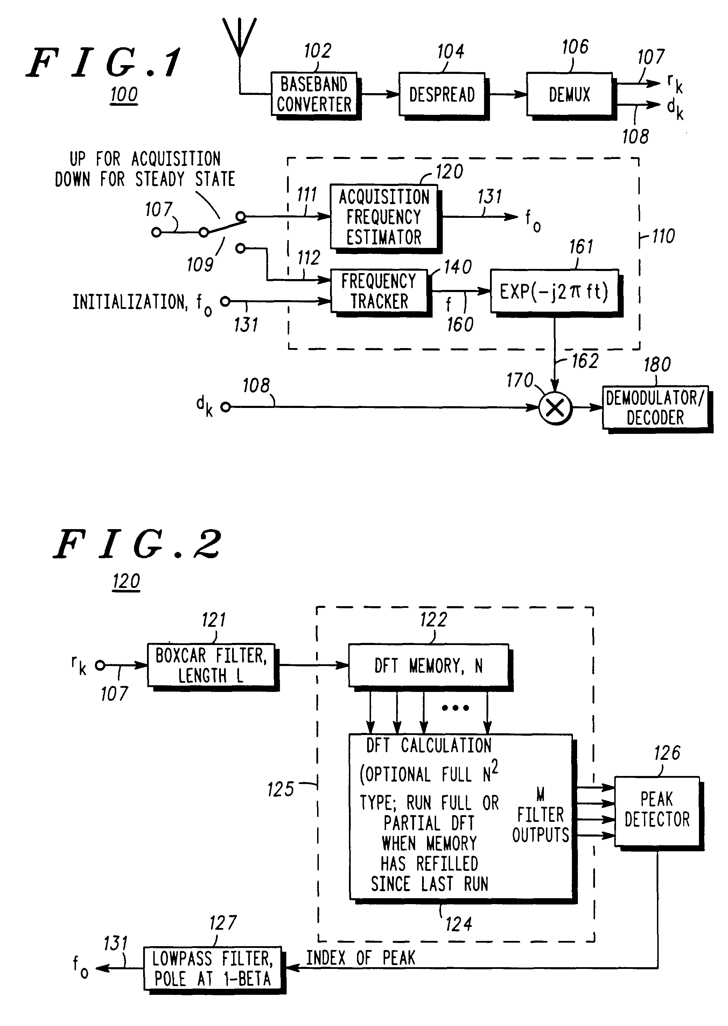

Turning then to FIG. 1, a presently preferred embodiment of a coherent receiver 100 is shown. A baseband converter 102 receives a reference symbol encoded spread spectrum signal via the antenna of the receiver 100, and downconverts the signal for further processing at baseband frequencies. Despreader 104 next despreads the signal, and the reference samples 107 are extracted from the signal by reference sample extractor/demultiplexer 106. The reference samples 107 are then fed to frequency estimator/AFC 110, while the data samples are appropriately delayed for phase rotation by the frequency offset correction output from AFC 110.

During initial acquisition, the reference samples 107 are routed via switch 109 as input 111 to acquisition frequency estimator 120. Acquisition frequency estimator 120, described more fully below, determines an initial frequency estimate fp 131, which is fed to frequency tracker 140.

The inserted reference symbols can be organized in blocks or uniformly distributed. For a flat fading channel, it is desirable to insert reference symbols periodically and uniformly in the data stream. For a DS-CDMA up-link with a RAKE receiver for frontend processing, one can treat the output of each RAKE "finger" as being a flat faded signal. Thus, the preferred embodiment communication system will uniformly insert one reference symbol for every Y coded data symbols. Y is a selected integer greater than or equal to unity. Upon acquisition switch 109 couples reference symbols 107 to frequency tracker 140 via input 112. Frequency tracker 140, also described more fully below, determines a frequency offset estimate f 160 based on both f₀ 131 and reference sample input 112. The frequency offset estimate 160 is then converted in circuit 161 and fed as frequency correction signal 162 to mixer 170. Mixer 170 serves to adjust the phase/frequency of the data samples 108 prior to processing by demodulator/detector 180.

FIG. 2 illustrates a preferred embodiment of acquisition frequency estimator 120. The reference samples 107 are first filtered so as to effect averaging, and thus reduce aliasing in the downsampled output of filter 121, since the overall despread bandwidth is several times wider than the reference sample bandwidth. Preferably, the boxcar filter 121 operates with a length L over the reference samples 107. For example, if there are 96 reference samples per despread frame, the filter is set to average every L, e.g., L = 3, samples and so output a sequence of 32 averaged reference samples. A skilled artisan should appreciate that while a boxcar filter is simple to implement here, other filters may also be employed.

The output of filter 121 (e.g., the 32 sample filtered reference sequence) is fed to DFT (discrete Fourier transform) memory 122, and then to DFT estimator 124, which together form correlator 125. DFT estimator 124 performs a partial DFT calculation (i.e., the number of DFT operations may be less than the memory length N) on the DFT memory 122 output. A set of frequencies is selected which span the signal space occupied by the received reference samples, making a basis set representation of the original noisy faded reference sequence and also defining a predetermined unit of time. The sequence of candidates (which are represented by powers of e⁻ji^{Θ} in equation 1 where the power referred to is m) are, of course, noiseless, and each has a different (e.g., greater) increase in phase per unit time than the preceding candidate. The basis functions are each correlated with the filtered reference sequence, to form correlation values for each candidate. The candidate corresponding to the peak correlation value is chosen as the best estimate of the segment of same frequency and greatest energy component of the received signal, with the time rate. of phase change of the corresponding candidate providing the initial frequency estimate of the signal. For the following, we dispense with further mention of boxcar filter 121 and denote the contents of DFT memory rₖ. This use of rₖ as memory contents follows for later circuits. Put differently, the DFT estimator output, Dₘ, may be expressed

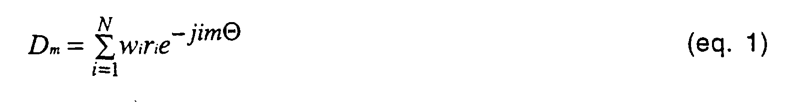

where m=0, ..., M-1, M is the number of filters, wᵢ is a window function, and θ is the root parameter of the transform (e.g., 2π divided by the number of points (N) in the DFT memory) giving the filter positions at frequencies mΘ/T (T is the time between sample k-1 and k). Recall that at time k, the received signal 107 rₖ has a desired part sₖ with channel gain αₖ and noise nₖ (i.e., rₖ = αₖsₖ + nₖ = Aₖejθk, with k = 1, ..., N). DFT estimator 124 operates as a family of narrowband filters of sufficient bandwidth and quantity to span the possible frequencies of received waveforms, with the equivalent filter outputs being undersampled since only the envelope of the result is needed. In other words, for N = 32 and M = 32, for each possible index m (= 0 through 31) a correlation is performed of r₁ through r₃₂, so Dₘ = [r₁(cos(1mΘ)+ jsin(1mΘ)] + ... + [r₃₂(cos(32mΘ)+ jsin(32mΘ)]. The output Dₘ for all 32 values is compared, with the index (say, 9) of the peak summed value giving the initial frequency estimate value of 9Θ/T.

A skilled artisan will appreciate how to optimize the DFT estimator 124. The overall bank resolution may also be improved by optimizing the window function w. Further, to do a low resolution search with fewer filters, the bandwidth may be increased and the filter center frequency separation increased by increasing Θ (and reducing M) (one such approach is shown in FIG. 4). Also, the individual filter bandwidths may be varied (e.g. , to compensate for the level of uncertainty in the frequency error) by adjusting the span N of DFT Memory 122. Moreover, this formulation (other than the number of filter banks and sequence observation length, N) may be efficiently implemented as a FFT (fast Fourier transformer). Finally, a skilled artisan will appreciate that the linearity of the DFT estimator is necessary for good performance at 0 or negative SNR (signal to noise ratio) with limited observation time N.

After each computation of DFT estimator 124, the output set D is fed to peak detector 126. The index m of the filter with the peak energy value is determined (i.e., D_{m'}= max (over M) |Dₘ|), and this index m' is filtered by filter 127 to reduce the effects of noise.

This blending of the old frequency estimate with the new information by filter 127 (i.e. , m' at time k) is done based on the possible rate of frequency change and the time varying noise, variance. The output is the initial frequency estimate fₒ 131 = (m')Θ/(2πT) Hz.

One skilled in the art should recognize that this DFT approach may be advantageously used in applications such as preamble or pilot signal detection, as well as signals for which tracking has been lost. It should be noted that the DFT estimator 124 may also operate on unknown received data. In such cases, the data bit values must be made transparent (e.g., by squaring for a BPSK (binary phase shift keyed) signal or raising to the 4th power for a QPSK signal. The reference sample-based estimates and the data-based estimates could then be blended using knowledge of process information (estimate confidence level, etc.)

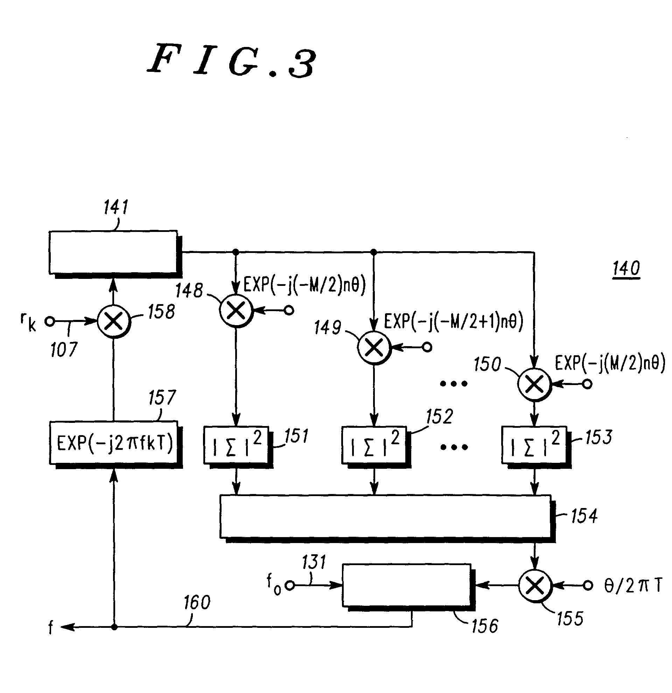

FIG. 3 shows a low resolution alternative embodiment of frequency tracker 140, in which the search compared to the acquisition circuit of FIG. 2 may be done with fewer filters (i.e., mixers 148-150, in conjunction with integrator blocks 151-153, respectively, where M is the number of filters and θ sets the frequency separation, selected so as to give sufficiently small filter spacing so the residual frequency offset error is not missed) and selector 154. Each mixer 148-150 serves to correlate one of a sequence of candidates (each of a differing angular rate of change value) with the filtered reference signal, the correlated outputs being integrated to form quality (e.g., energy) estimates. Selector 154 then selects the best quality estimate and outputs an estimate of the frequency offset of the candidate corresponding to the best quality estimate. Scaler 155 maps the output integer to the frequency in Hz. The bandwidth may thus be increased and filter 156 center frequency separation increased by increasing θ and reducing M. A principal advantage is that it is more robust over the fixed lag approach because of its wider bandwidth and linear processing using correlation with a noiseless candidate.

Thus, it will be apparent to one skilled in the art that there has been provided in accordance with the invention, a method and apparatus of frequency estimation for coherent reception of a signal that fully satisfies the objectives, aims and advantages set forth above.

## Claims

1. A method for offset frequency estimation of a received signal having known reference information, the method comprising:
(a) extracting the reference information from the received signal;
(b) filtering the reference information to output a filtered reference sequence;
(c) correlating the filtered reference sequence against a predetermined reference signal to form correlation values; and characterised in that step (c) comprises correlating the filtered reference sequence against a plurality of candidates which comprise the predetermined reference signal, each candidate having a different phase change per a predetermined unit of time to obtain correlation values for each candidate, and further comprising the step of (d) determining an offset frequency estimate according to the correlation values obtained.

2. The method of claim 1, wherein the predetermined reference signal is a sequence of noiseless candidates, each candidate of the sequence of noiseless candidates having a greater increase in phase per predetermined unit of time than a preceding candidate.

3. The method of claim 2, wherein step (d) further comprises detecting a peak correlation value, and determining the offset frequency estimate from the candidate corresponding to the peak correlation value.

4. The method of any preceding claim wherein step (c) comprises performing a discrete Fourier transform of the filtered reference sequence.

5. The method of claim 1, further comprising, the steps of; correlating each of the sequence of candidates, wherein each of the sequence of candidates has a different predetermined angular value from each of the others of the sequence of candidates, with the filtered reference signal to form plural quality estimates; and determining an offset frequency estimate from the predetermined angular value of a first one of the sequence of candidates corresponding to a best of the plural quality estimates.

6. A receiver (100) for coherent reception of a first signal having known reference information and an extractor (106) for extracting the reference information (107) from the first signal, the receiver (100) including an offset frequency estimator (120) comprising:
(a) filtering means (121) for filtering the reference information to output a filtered reference sequence;
(b) correlating means (125) for correlating the filtered reference sequence against a predetermined reference signal to form correlation values; and characterised in that the correlating means (125) is adapted to correlate the filtered reference sequence against a plurality of candidates which comprise the predetermined reference signal, each candidate having a different phase change per a predetermined unit of time to obtain correlation values for each candidate and further comprising
(c) determining means (126) for determining an offset frequency estimate according to the correlation values obtained.

## Patentansprüche

1. Verfahren zur Abschätzung der Frequenzverschiebung eines empfangenen Signals mit bekannter Referenzinformation, mit:
(a) Extrahieren der Referenzinformation aus dem empfangenen Signal;
(b) Filtern der Referenzinformation zur Ausgabe einer gefilterten Referenzfolge;
(c) Korrelieren der gefilterten Referenzfolge mit einem vorbestimmten Referenzsignal, um Korrelationswerte zu bilden; und dadurch gekennzeichnet, dass der Schritt (c) Korrellieren der gefilterten Referenzfolge mit einer Mehrzahl von Kandidaten, die das vorbestimmte Referenzsignal enthalten, aufweist, wobei jeder Kandidat eine unterschiedliche Phasenänderung pro einer vorbestimmten Zeiteinheit aufweist, um Korrelationswerte für jeden Kandidaten zu gewinnen; und ferner
den Schritt (d) des Bestimmens einer Abschätzung einer Frequenzverschiebung gemäß den gewonnenen Korrelationswerten.

2. Verfahren nach Anspruch 1, wobei das vorbestimmte Referenzsignal eine Folge von rauscharmen Kandidaten ist, und jeder Kandidat der Folge von rauscharmen Kandidaten eine größere Zunahme in der Phase pro vorbestimmter Zeiteinheit aufweist als ein vorangehender Kandidat,

3. Verfahren nach Anspruch 2, wobei der Schritt (d) ferner einen Schritt enthält, um einen Spitzenkorrelationswert zu detektieren, und einen Schritt, um von dem Kandidaten, der mit dem Spitzenkorrelationswert korrespondieren, die Abschätzung der Frequenzverschiebung zu bestimmen.

4. Verfahren nach irgendeinem der vorangegangenen Ansprüchen, wobei der Schritt (c) einen Schritt enthält, um eine diskrete Fourier-Transformation der gefilterten Referenzfolge durchzuführen.

5. Verfahren nach Anspruch 1, ferner enthaltend folgende Schritte:
Korrelieren jedes der Folge von Kandidaten, wobei jeder der Folge von Kandidaten einen von jedem der anderen der Folge von Kandidaten unterschiedlichen vorbestimmten Winkelwert aufweist, mit dem gefilterten Referenzsignal, um eine Mehrzahl von Qualitätsabschätzungen zu bilden; und Bestimmen einer Abschätzung der Frequenzverschiebung von dem vorbestimmten Winkelwert eines ersten der Folge von Kandidaten, der mit einer Besten der Mehrzahl von Qualitätsabschätzungen korrespondiert.

6. Empfänger (100) zum kohärenten Empfang eines ersten Signals mit einer bekannten Referenzinformation und einem Extrahierer (106) zur Extrahierung der Referenzinformation (107) aus dem ersten Signal, wobei der Empfänger (100) einen Frequenzverschiebungsschätzer (120) enthält, der folgendes enthält:
(a) Filtermittel (121) zur Filterung der Referenzinformation, um eine gefilterte Referenzfolge auszugeben;
(b) Korrelationsmittel (125) zur Korrelation der gefilterten Referenzfolge mit einem vorbestimmten Referenzsignal, um Korrelationswerte zu bilden; und
dadurch gekennzeichnet, dass das Korrelationsmittel (125) geeignet ist, um die gefilterte Referenzfolge mit einer Mehrzahl von Kandidaten zu korrelieren, die das vorbestimmte Referenzsignal enthalten, wobei jeder Kandidat eine unterschiedliche Phasenänderung pro einer vorbestimmten Zeiteinheit aufweist, um Korrelationswerte für jeden Kandidaten zu gewinnen, und ferner
(c) ein Bestimmungsmittel (126) zur Bestimmung einer Abschätzung einer Frequenzverschiebung gemäß den gewonnenen Korrelationswerten vorgesehen ist.

## Revendications

1. Procédé d'estimation de la fréquence de décalage d'un signal reçu ayant des informations de référence connues, le procédé comprenant :
(a) l'extraction des informations de référence du signal reçu ;
(b) le filtrage des informations de référence pour fournir une séquence de référence filtrée ;
(c) la corrélation de la séquence de référence filtrée d'après un signal de référence prédéterminé pour former des valeurs de corrélation ; et caractérisé en ce que l'étape (c) comprend la corrélation de la séquence de référence filtrée d'après une pluralité de candidats qui comprend le signal de référence prédéterminé, chaque candidat ayant un déphasage différent pour une unité de temps prédéterminée pour obtenir des valeurs de corrélation pour chaque candidat, et comprenant, de plus, l'étape de (d) détermination d'une estimation de fréquence de décalage suivant les valeurs de corrélation obtenues.

2. Procédé de la revendication 1, dans lequel le signal de référence prédéterminé est une séquence de candidats exempts de bruit, chaque candidat de la séquence de candidats exempts de bruit ayant une augmentation plus grande en phase par unité de temps prédéterminée qu'un candidat précédent.

3. Procédé de la revendication 2, dans lequel l'étape (d) comprend, de plus, la détection d'une valeur de corrélation maximale, et la détermination de l'estimation de la fréquence de décalage par le candidat correspondant à la valeur de corrélation maximale.

4. Procédé de l'une quelconque des revendications précédentes, dans lequel l'étape (c) comprend l'exécution d'une transformée de Fourier discrète de la séquence de référence filtrée.

5. Procédé de la revendication 1, comprenant, de plus, les étapes de : corrélation de chaque candidat de la séquence de candidats, dans laquelle chaque candidat de la séquence de candidats a une valeur angulaire prédéterminée différente de chacun des autres candidats de la séquence de candidats, avec le signal de référence filtré pour former des estimations de qualité multiples ; et détermination d'une estimation de la fréquence de décalage d'après la valeur angulaire prédéterminée d'un premier candidat de la séquence de candidats correspondant à une meilleure des estimations de qualité multiples.

6. Récepteur (100) pour la réception cohérente d'un premier signal ayant des informations de référence connues et un extracteur (106) pour extraire les informations de référence (107) du premier signal, le récepteur (100) incluant un estimateur de fréquence de décalage (120) comprenant :
(a) un moyen de filtrage (121) pour filtrer les informations de référence pour fournir une séquence de référence filtrée ;
(b) un moyen de corrélation (125) pour corréler la séquence de référence filtrée d'après un signal de référence prédéterminé pour former des valeurs de corrélation ; et caractérisé en ce que le moyen de corrélation (125) est conçu pour corréler la séquence de référence filtrée d'après une pluralité de candidats qui comprend le signal de référence prédéterminé, chaque candidat ayant un déphasage différent pour une unité de temps prédéterminée pour obtenir des valeurs de corrélation pour chaque candidat, et comprenant, de plus :
(c) un moyen de détermination (126) pour déterminer une estimation de fréquence de décalage suivant les valeurs de corrélation obtenues.
